# NEUE EUROPÄISCHE PATENTSCHRIFT

(11) **EP 1 924 391 B2**
(45) Veröffentlichungstag und Bekanntmachung des Hinweises auf die Entscheidung über den Einspruch: **31.05.2017**
(45) Hinweis auf die Patenterteilung: 30.12.2009
(21) Anmeldenummer: 06775915.9
(22) Anmeldetag: 26.08.2006
(51) Int. Cl.: B23K 26/38, F01D 5/18

(54) **VERFAHREN ZUM FERTIGEN VON BOHRUNGEN**
METHOD OF PRODUCING HOLES
PROCEDE DE PRODUCTION D'ALESAGES

(30) Priorität: 06.09.2005 DE 102005042270
(43) Veröffentlichungstag der Anmeldung: 28.05.2008
(73) Patentinhaber: MTU Aero Engines GmbH, 80995 München (DE)
(72) Erfinder: KRIEGMAIR, Josef, 85465 Langenpreising (DE)
(74) Vertreter: Schlotter, Alexander Carolus Paul
(86) Internationale Anmeldenummer: PCT/DE2006/001497
(87) Internationale Veröffentlichungsnummer: WO 2007/028355

(56) Entgegenhaltungen:
- EP-A2- 1 491 722
- DE-A1- 10 335 657

## Beschreibung

Die Erfindung betrifft ein Verfahren zum Fertigen von Bohrungen in einem Bauteil insbesondere von Strömungsmaschinen, wobei sich jede Bohrung von einer ersten, äußeren Oberfläche zu einer zweiten, inneren Oberfläche des Bauteils erstreckt. Ferner wird eine Fertigungsanordnung zur Durchführung des Verfahrens angegeben.

Die EP 1 246 711 B1 beschreibt beispielsweise solch ein Verfahren zum Herstellen einer als Kühlluftbohrung ausgebildeten Öffnung in einem metallischen Bauteil einer Gasturbine, bei dem die Öffnung wenigstens abschnittsweise einen nicht zylindrisch ausgebildeten Trichter umfasst, sich von einer ersten Oberfläche zu einer zweiten Oberfläche des Bauteils erstreckt und mit einem Laserstrahl ausgebildet wird.

Die DE-A-103 35657 beschreibt ein Verfahren zur Herstellung einer Kühlbohrung, wobei eine reale Wandungsdicke des Bauteils gemessen wird. Anschliessend wird ein parametrischer Bohrungsgeometriewert ermittelt, und die Bohrung gemäß dem ermittelten Bohrungsgeometriewert hergestellt.

Kühlluftbohrungen haben einen geringen Abstand, gehen bei neuen Bauteiltypen unter verschiedenen Winkeln in das Bauteil und liegen teilweise nahe an Wandgeometrien. Toleranzen an der Außengeometrie, z. B. bei Schaufelprofilen, und an der Innengeometrie, z. B. bei Hohlräumen bzw. Kernen, als auch der Versatz von beiden zueinander machen eine prozeßstabile Fertigung schwierig. Weiter erschwert wird diese, weil die Toleranzen der Außenfläche ein Verschieben, Verdrehen und Kippen des Bauteils bewirken, was Einfluß auf die Lage und Ausprägung der Kühlluftbohrungen hat.

Gemäß dem bekannten Stand der Technik werden die Bohrungen auf Basis der Nominalgeometrie gefertigt. Die Toleranzen, die durch den Spannvorgang verursacht sind, werden teilweise durch Einmessen des Bauteils, was meist mit taktilen Tastern erfolgt, beseitigt. Die Toleranzen der Außen- und Innengeometrie, wie Hohlräumen und Kernen, bleiben dabei bisher unberücksichtigt.

An Kühlluftbohrungen werden hohe Anforderung hinsichtlich Lage und Ausprägung, insbesondere bei Trichterbohrung (Shaped Holes), gestellt, um die spezifizierte Kühlleistung für das Bauteils zu erreichen. Wenn diese z.B. aufgrund der unzureichend ausgebildeten Trichterform zu gering ist, kann dies zu einer unzulässigen Überhitzung des Bauteils und zu dessen Versagen führen. Dies wiederum kann einen Ausfall der gesamten Strömungsanlage bewirken. Dies trifft sowohl bei der Neuteilfertigung als auch im Maintenance, Repair, Overhaul (MRO) zu.

Der Erfindung liegt daher die Aufgabe zugrunde, die eingangs genannten Verfahren zu verbessern. Insbesondere soll ein Verfahren zur Verfügung gestellt werden, bei dem unzureichend ausgeprägte Trichtergeometrien an der Außenfläche, unvollständig gebohrte Bohrungen, Versatz der Austrittsöffnungen der Bohrungen, Anbohrungen an den Wänden der Innengeometrie und Überschneidung von Bohrungen aufgrund der Toleranzen des Bauteils, die im Verhältnis zu den Abmessungen der Kühlluftbohrungen sehr groß sind, vermieden werden.

Diese Aufgabe wird erfindungsgemäß durch ein Verfahren mit den Merkmalen des Patentanspruchs 1 und eine Fertigungsanordnung mit den Merkmalen des Patentanspruchs 9 gelöst. Vorteilhafte Weiterbildungen der Erfindung sind in den abhängigen Ansprüchen angegeben.

Durch die angegebene Lösung steigt die Prozeßqualität und mit ihr die Qualität der Bohrungen, weil der Versatz der Bohrungen, verursacht durch Bauteiltoleranzen, vermieden wird und die Bohrtrichter gemäß Spezifikation ausgebildet sind. Ferner können Anbohrungen aufgrund von Versatz der Bohrungen und/oder Kerne vermieden werden. Überschneidende Bohrungen ausgelöst durch Bauteiltoleranzen werden ebenfalls vermieden. Dies lässt eine Erhöhung der Lebensdauer des Bauteils erwarten. Nacharbeits- und Ausschußkosten entfallen. Es kommen nur Rohteile zur Bearbeitung, die innerhalb der Spezifikation liegen. Der Aufwand in der Schlußkontrolle wird aufgrund der hohen Prozeßstabilität nach der Erprobung bei den Bohrungen reduziert.

Erfindungsgemäß weist ein Verfahren zum Fertigen von Bohrungen in einem Bauteil insbesondere von Strömungsmaschinen, wobei sich jede Bohrung von einer ersten, äußeren Oberfläche zu einer zweiten, inneren Oberfläche des Bauteils erstreckt, folgende Schritte auf:
- Erstellen eines 3-D Modells der Ist-Geometrie des Bauteils; zumindest für den Bereich der Bohrungen
- Einpassen jeder Bohrung auf Basis der Ist-Geometrie des Bauteils
- Generieren eines Fertigungsprogrammes für jede einzelne Bohrung.

Eine Fertigung von Kühlluftbohrungen erfordert, dass Außen- und Innengeometrie (Hohlräume bei der Turbinenschaufel) des einzelnen Teils bekannt sind. Diese wird über ein 3D-Modell vom einzelnen Bauteil zur Verfügung gestellt. Ein 3D-Modell kann ein Flächen- oder Volumenmodell sein. Das 3D-Modell wird über Computertomographie (CT) erstellt. Wenn die Genauigkeit der CT bei der Außengeometrie unzureichend ist, so wird diese über ein optisches Messverfahren erzeugt. CT- und Daten des optischen Verfahrens werden zu einem 3D-Modell verbunden. Es ist dabei auch ausreichend, nur die Ausschnitte, die für die Belochung und für die Ausrichtung (z.B. 6-point nest) des einzelnen Bauteils notwendig sind, in ein 3D-Modell zu überführen.

Auf Basis des 3D-Modells vom einzelnen Bauteil mit der Ist-Geometrie wird jede Bohrung innerhalb definierter Grenzen - dies können die Toleranzen sein - (Lage, Durchmesser, Zylinderlänge, Trichtertiefe, Trichterbreite, Trichterlänge, Trichterwinkel) durch Versetzen des Lochbildes bzw. der Lochgruppe oder Einzelbohrung, Kippen der Bohrung, Verschieben der Bohrung, Anpassen des Durchmessers, Versetzen des Trichters (Diffuser) in der Bohrungsachse, Kippen des Trichters mit der Bohrungsachse, Anpassen der Trichterwinkel, eingepaßt.

Hierdurch wird erreicht, dass der Versatz des Bohrungsaustritts aufgrund der Toleranz der Außengeometrie (z. B. Airfoil) vermieden wird, wodurch die Überdeckung des Bauteils mit dem Kühlfilm unbeeinflußt bleibt. Ferner wird eine Trichterausprägung gemäß Spezifikation trotz der Toleranz der Außengeometrie, die Einfluß auf die Trichterausprägung hat, erzielt. Außerdem werden Anbohrungen aufgrund von Toleranzen der Innengeometrie (Cavity bzw. Kern oder Kernversatz) vermieden. Desweiteren werden Überschneidende Bohrungen (Merging Holes) bzw. eine Unterschreitung von Mindestabständen aufgrund der Toleranzen des Rohteils vermieden. Der Einfluß, der von einem Verschieben, Verdrehen und Kippen des Bauteils gegenüber der Nominallage aufgrund der Toleranzen der Außenflächen, auf denen die Basen gebildet werden (Anlagepunkte / 6-point nest), auf die Lage und Ausprägung der Kühlluftbohrungen wird beseitigt. Weiterhin besteht die Möglichkeit, Bohrungen in geringem Abstand zu anderer Geometrie zu fertigen. Die Belochungsanlage kann aufgrund der Kenntnis der Ist-Geometrie so gesteuert werden, daß vor einem Durchschuß / Durchbruch in den Innenraum, die Leistung des Fertigungsverfahrens zurückgefahren wird. Dies vermeidet ein Anbohren der anderen Geometrie. Ist der Bohrprozeß stabil, kann die Ist-Bohrtiefe berechnet werden. Ist der Prozeß unzureichend stabil, erfolgt eine Inprozeßmessung der Bohrtiefe. Hierdurch wird eine prozeßstabile Belochung möglich, die bei herkömmlichen Verfahren aufgrund zu geringer Hinterfütterung (Laserbohren) bzw. zu geringem Abstand der angrenzenden Kontur (Erodieren, elektrochemisches Bohren) nicht bzw. nicht prozeßstabil möglich ist. Nutzen bringt dies insbesondere bei kleinen Schaufeln von Hubschraubertriebwerken oder Triebwerken von Business Jets, denn hier sind die Toleranzen in Relation zu den Bauteilabmessungen höher als bei größeren Schaufeln. Schließlich wird die Möglichkeit geschaffen, Bohrungen in ein teilbelochtes Bauteil (z. B. bei MRO-Aufgaben) angepaßt auf die vorhandenen Bohrungen einzubringen.

Nach der Einpassung werden die Fertigungsprogramme mit Verfahrbewegungen, Abtragsvolumen und Prozeßparametern (Vorschub, Leistung, etc.) für die Bohrprozesse für jede einzelne Bohrung des jeweiligen Bauteils generiert. Diese Parameter können durch Erprobungen abgesichert werden. Dies ermöglicht die Optionen, daß auf die Speicherung der Fertigungsprogramme für jedes einzelne Bauteil verzichtet werden kann bzw. daß nur eine Sicherung der Transformationsmatrizen und der Prozeßparameter pro Bauteil notwendig ist.

Die Lageabweichung jedes einzelnen Bauteil in der Spannvorrichtung - hervorgerufen durch systematische Fehler der Spannvorrichtung - werden vorteilhafterweise rechnerisch korrigiert. Die Streuung beim Spannprozeß kann, sofern notwendig, über ein Einmessen ebenfalls ermittelt und rechnerisch korrigiert werden. Das Bauteil liegt abgesehen von der Meßunsicherheit, die bei richtiger Auswahl der Meßmittels und der Verfahrensparameter vernachlässigbar ist, definiert in der Belochungsmaschine.

Über einen Vergleich zwischen dem nominalen 3D-Modell des Bauteils und dem 3D-Modell mit der Ist-Geometrie des einzelnen Bauteils wird ermittelt, ob Anpassungen notwendig sind. Dieser Schritt kann aber auch entfallen, wenn keine Änderungen notwendig sind.

Ferner ist eine erfindungsgemäße Fertigungsanordnung zum Fertigen von Bohrungen in einem Bauteil, insbesondere von Strömungsmaschinen, beispielsweise eine Belochungsanlage, wobei sich jede Bohrung von einer ersten, äußeren Oberfläche zu einer zweiten, inneren Oberfläche des Bauteils erstreckt, dadurch gekennzeichnet, dass die Anordnung eine zentrale Recheneinheit aufweist, die mit einer Vorrichtung zum Erstellen eines 3-D Modells der Ist-Geometrie des Bauteils verbunden ist. Ferner weist die Fertigungsanordnung Einrichtungen zum automatischen Einpassen der Bohrung auf Basis der Ist-Geometrie des Bauteils und Einrichtungen zum automatischen Generieren von Fertigungsprogrammen für jede einzelne Bohrung auf. Hiermit läßt sich das erfindungsgemäße Verfahren durchführen.

Vorteilhaft ist die zentrale Recheneinheit mit einer Vorrichtung zum automatischen Korrigieren der Lageabweichung des Bauteils in der Spannvorrichtung verbunden.

Ferner ist eine vorteilhafte Weiterbildung der erfindungsgemäßen Fertigungsanordnung dadurch gekennzeichnet, dass ein automatisches Bohrwerkzeug mit der Recheneinheit verbunden ist. Das Bohrwerkzeug kann zur spanabhebenden Bearbeitung, zum Laserabtrag, zum elektrochemischen Abtrag oder zum Erodieren vorgesehen sein.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigen:
Fig. 1 in perspektivischer Darstellung eine Turbinenschaufel einer Gasturbine mit als Kühlluftbohrungen ausgebildeten Öffnungen;
Fig. 2 eine schematische ausschnittsweise Querschnittsansicht durch ein Bauteil;
Fig. 3 eine zweite schematische ausschnittsweise Querschnittsansicht durch ein Bauteil.

Die Nachfolgenden Figuren sind schematische Darstellungen und dienen der Erläuterung der Erfindung. Gleiche und ähnliche Bauteile werden durch gleiche Bezugszeichen dargestellt. Die Richtungsangaben beziehen sich auf die Strömungsmaschine, sofern nicht etwas anderes angegeben ist.

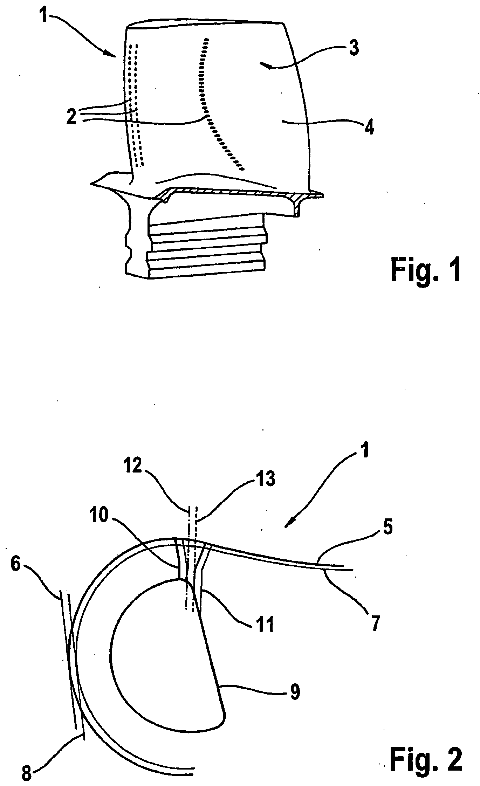

Fig. 1 zeigt als Bauteil eine Turbinenschaufel 1 einer Gasturbine, wie z. B. einem Flugtriebwerk, in perspektivischer Darstellung, in der zahlreiche als Kühlluftbohrungen ausgebildete Öffnungen 2 nach dem erfindungsgemässen Verfahren ausgebildet sind. Die Kühlluftbohrungen 2 verlaufen im allgemeinen in einem spitzen Winkel durch die Bauteilwand 3, welcher meist im Bereich von 12° bis 35° zu einer äusseren Oberfläche 4 des Bauteils 1 liegt und z. B. 30° beträgt. Aus einem Hohlraum in der Turbinenschaufel 1 wird Verdichterluft durch die Kühlluftbohrungen 2 geleitet, um einen Kühlluftfilm über die äussere Oberfläche 4 der Turbinenschaufel 1 zu leiten.

Die Turbinenschaufel 1 besteht aus einem Metall, wie z. B. einer Ni- oder Co- Basislegierung, kann aber auch aus einer Keramik oder einem anderen hitzebeständigen Material bestehen, und wird zur Herstellung der Kühlluftbohrungen 2 in einer Bearbeitungsmaschine eingespannt, in der sie entlang mehrer Achsen verfahren bzw. gedreht werden kann. Die Relativbewegung zwischen einem Bohrwerkzeug, mit dem das Ausbilden der Kühlluftbohrungen 2 erfolgt, und dem zu bearbeitenden Bauteil 1 wird im allgemeinen durch Bewegen des Bauteils 1 erzeugt. Ebenso kann diese durch eine im allgemeinen eingeschränktere Bewegung des Bohrwerkzeugs oder eine überlagerte Bewegung erzielt werden.

Figur 2 zeigt eine schematische ausschnittsweise Querschnittsansicht durch ein Bauteil 1. Dabei ist die Ist-Geometrie der Außenfläche 7 in dünner Strichstärke dargestellt und die Nominal-Geometrie der Außenfläche 5 in dicker Strichstärke. Hierdurch wird die Ist-Basis für die Fertigung 8 und die Nominal-Basis für die Fertigung 6 definiert. Ferner ist eine Innenfäche 9 dargestellt, die im vorliegenden Ausführungsbeispiel einen zum Rotor durchgehenden Kühlkanal begrenzt.

Abhängig von der Wahl der Fertigungsbasis - Nominal-Basis 6 oder Ist-Basis 8 - wird entweder eine Bohrung 11 auf Ist-Basis oder eine Bohrung 10 auf Nominal-Basis mit entsprechenden Bohrungsachsen 13, 12 erzeugt. Durch Wahl der Ist-Basis wird ein Anbohren der Rückwand der Innenfläche 9 vermieden.

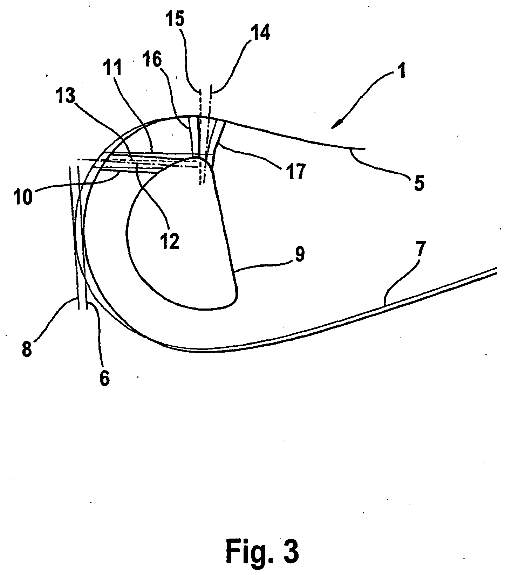

Figur 3 zeigt eine zweite schematische ausschnittsweise Querschnittsansicht durch ein Bauteil 1, welches im wesentlichen dem in Figur 2 dargestellten Bauteil entspricht. Im Unterschied hierzu weist das Bauteil in Figur 3 eine zweite Bohrung 16, 17 auf, die entweder eine Bohrungsachse 15 basierend auf der Ist-Basis oder eine Bohrungsachse 14 basierend auf der Nominal-Basis aufweist. Durch Wahl der Ist-Basis werden eine Anbohrung der Rückwand und überschneidende Bohrungen vermieden.

Durch das erfindungsgemäße Fertigungsverfahren wird eine Bohrung auf Ist-Basis erzeugt. Hierdurch wird der Einfluß, der von einem Verschieben, Verdrehen und Kippen des Bauteils gegenüber der Nominallage aufgrund der Toleranzen der Außenflächen, auf denen die Basen gebildet werden (Anlagepunkte / 6-point nest), auf die Lage und Ausprägung der Kühlluftbohrungen beseitigt. Zudem werden überschneidende Bohrungen und Anbohrungen, hervorgerufen durch Toleranzen, von Außen- und Innengeometrie und der Verschiebung und Verkippung der Innen- zur Außengeometrie, vermieden.

## Patentansprüche

1. Verfahren zum Fertigen von Bohrungen (2) in einem Bauteil (1), insbesondere von Strömungsmaschinen, wobei sich jede Bohrung von einer ersten, äußeren Oberfläche (7) zu einer zweiten, inneren Oberfläche (9) des Bauteils erstreckt und wobei das Verfahren folgende Schritte aufweist:
- Erstellen eines 3-D Modells der Ist-Geometrie des Bauteils, zumindest für den Bereich der Bohrungen;
- Einpassen jeder Bohrung auf Basis der Ist-Geometrie des Bauteils;
- Generieren eines Fertigungsprogrammes für jede einzelne Bohrung, wobei das 3-D Modell der Ist-Geometrie mittels ComputerTomographie erstellt wird.

2. Verfahren nach Patentanspruch 1, wobei in Abhängigkeit von der Ist-Geometrie der äußeren Oberfläche (7) ein korrigieren der Lageabweichung des Bauteils in seiner Spannvorrichtung erfolgt.

3. Verfahren nach Patentanspruch 1 oder 2, wobei als weiterer Verfahrensschritt die Bohrtiefe berechnet und/oder im Prozess gemessen wird.

4. Verfahren nach einem der vorangegangenen Patentansprüche,
wobei die bei der Generierung der Fertigungsprogramme erstellte Transformationsmatrix und Prozessparameter abgespeichert werden.

5. Verfahren nach einem der Patentansprüche 1 bis 4, wobei das 3-D Modell der Ist-Geometrie über ein optisches Messverfahren erstellt wird.

6. Verfahren nach einem der vorangegangenen Patentansprüche,
wobei mehrere gleichartige Bauteile parallel durch jeweilige Transformation eines Musterdatensatzes gefertigt werden.

7. Verfahren nach einem der vorangegangenen Patentansprüche,
wobei die Fertigungsprogramme Verfahrwege, Abtragsvolumen und Prozessparameter aufweisen.

8. Verfahren nach einem der vorangegangenen Patentansprüche,
wobei die Bohrungen durch spanabhebende Bearbeitung, durch Laserabtrag, durch elektrochemische Bearbeitung oder durch Erodieren erzeugt werden.

9. Fertigungsanordnung zum Fertigen von Bohrungen (2) in einem Bauteil (1) insbesondere von Strömungsmaschinen, wobei sich jede Bohrung von einer ersten, äußeren Oberfläche (7) zu einer zweiten, inneren Oberfläche (9) des Bauteils erstreckt, wobei die Anordnung eine zentrale Recheneinheit aufweist, die mit einer Vorrichtung zum Erstellen eines 3-D Modells der Ist-Geometrie des Bauteils verbunden ist, und wobei Einrichtungen zum automatischen Einpassen jeder Bohrung auf Basis der Ist-Geometrie des Bauteils und Einrichtungen zum automatischen Generieren von Fertigungsprogrammen für jede einzelne Bohrung vorgesehen sind, und wobei die Fertigungsanordnung zum Ausführen eines Verfahrens nach Anspruch 1 eingerichtet ist.

10. Fertigungsanordnung nach Anspruch 9, wobei ein automatisches Bohrwerkzeug mit der Recheneinheit verbunden ist.

## Claims

1. Method for producing holes (2) in a component (1), in particular of hydrodynamic machines, wherein each hole extends from a first, outer surface (7) to a second, inner surface (9) of the component and wherein the method comprises the following steps:
- the production of a 3D model of the actual geometry of the component, at least for the region of the holes;
- the fitting of each hole on the basis of the actual geometry of the component;
- the generation of a production programme for each individual hole,
wherein the 3D model of the actual geometry is provided by means of computer tomography.

2. Method according to claim 1, wherein any deviation in the position of the component is corrected in a clamping fixture in dependence on the actual geometry of the outer surface (7).

3. Method according to claim 1 or 2, wherein a further process step comprises the calculation and/or measuring of the drilling depth within the process.

4. Method according to any of the preceding claims, wherein the transformation matrix and process parameters provided in the generation of the production programmes are stored.

5. Method according to any of claims 1 to 4, wherein the 3D model of the actual geometry is provided using an optical measuring method.

6. Method according to any of the preceding claims, wherein several components of the same kind are produced in parallel by means of the transformation of a pattern data set.

7. Method according to any of the preceding claims, wherein the production programmes comprise traversing distances, removal volumes and process parameters.

8. Method according to any of the preceding claims, wherein the holes are produced by means of machining, laser machining, electrochemical machining or erosion.

9. Arrangement for producing holes (2) in a component (1), in particular of hydrodynamic machines, wherein each hole extends from a first, outer surface (7) to a second, inner surface (9) of the component, wherein the arrangement comprises a central processor connected to a device for providing a 3D model of the actual geometry of the component, and wherein devices for the automatic fitting of each hole on the basis of the actual geometry of the component and devices for the automatic generation of production programmes for each hole are provided and wherein the arrangement is adapted for performing a method according to claim 1.

10. Arrangement according to claim 9, wherein an automatic drilling tool is connected to the processor.

## Revendications

1. Procédé pour la realization d'alésages (2) dans un composant (1), en particulier d'une turbomachine, où chaque alésage s'étend d'une première surface (7) extérieure vers une deuxième surface (9) intérieure du composant, et où le procédé comprend les étapes suivantes :
* création d'un modèle 3D de la géométrie effective du composant, au moins pour la zone des alésages;
* ajustement de chaque alésage sur la base de la géométrie effective du composant;
* génération d'un programme de production de chaque alésage distinct où le modèle 3 D de la géometrie effective est créé par tomographie assistée par ordinateur.

2. Procédé selon la revendication 1, où une correction de l'écart de position du composant dans son dispositif de serrage est effectuée en function de la géométrie effective de la surface extérieure (7).

3. Procédé selon la revendication 1 où la revendication 2, où, comme autre étape de procédé, la profondeur d'alésage est calculée et/ou mesurée pendant le processus.

4. Procédé selon l'une des revendications précédentes, où la matrice de transformation créée lors de la génération du programme de production et les paramètres de processus sont mémorisés.

5. Procédé selon l'une des revendications 1 à 4, où le modèle 3 D de la géométrie effective est créé par un procédé de mesure optique.

6. Procédé selon l'une des revendications précédentes, où plusieurs composants identiques sont réalisés parallèlement par transformations respectives d'un enregistrement type.

7. Procédé selon l'une des revendications précédentes, où les programmes de production comprennent des trajets de déplacement, des volumes d'enlèvement de matière et des paramètres de processus.

8. Procédé selon l'une des revendications précédentes, où les alésages sont générés par usinage à enlèvement de copeaux, par enlèvement de matière par laser, par usinage électrochimique ou par érosion.

9. Système de production pour la réalisation d'alésages (2) dans un composant (1), en particulier d'une turbomachine, où chaque alésage s'étend d'une première surface (7) extérieure vers une deuxième surface (9) intérieure du composant, où le système comporte une unité de calcul centrale reliée à un dispositif pour la création d'un modèle 3 D de la géométrie effective du composant, et où sont prévus des dispositifs pour l'ajustement automatique de chaque alésage sur la base de la géométrie effective du composant ainsi que des dispositifs pour la génération automatique de programmes de production de chaque alésage distinct, et où le système de production est arrangé pour exécuter un procédé selon la revendication 1.

10. Système de production selon la revendication 10, où un outil d'alésage automatique est relié à l'unité de calcul.
